# EUROPEAN PATENT SPECIFICATION

(11) **EP 3 582 922 B1**
(45) Date of publication and mention of the grant of the patent: **14.04.2021**
(21) Application number: 17714030.8
(22) Date of filing: 20.02.2017
(51) Int. Cl.: B23K 23/00, B23K 101/06, B23K 101/10

(54) **METHOD OF AND DEVICE FOR ALUMINOTHERMIC WELDING OF PIPES WITH A SLEEVE COVERING THE PIPES TO BE WELDED**
VERFAHREN UND VORRICHTUNG ZUM ALUMINOTHERMISCHEN SCHWEISSEN VON ROHREN MIT EINER DIE ZU SCHWEISSENDEN ROHRE ABDECKENDEN HÜLSE
PROCÉDÉ ET DISPOSITIF DE SOUDAGE ALUMINOTHERMIQUE DE TUBES AVEC UN MANCHON RECOUVRANT LES TUBES À SOUDER

(43) Date of publication of application: 25.12.2019
(73) Proprietor: Snapwelder AS, 5094 Bergen (NO)
(72) Inventor: PETTERSEN, Bent Rolf, NO-5094 Bergen (NO)
(74) Representative: Zacco Norway AS
(86) International application number: PCT/NO2017/050043
(87) International publication number: WO 2018/151603

(56) References cited:
- CN-U- 205 147 580
- DE-C- 15 027
- DE-C- 707 781
- DE-U1- 29 812 242
- US-A- 3 684 003

## Description

### TECHNICAL FIELD

The present invention relates to a method and a device for aluminothermic welding of pipe members, such as pipes and pipe flanges used in wellbores or pipelines.

### BACKGROUND

By a thermite or aluminothermic reaction, which is an exothermic reaction, high temperatures are achieved by converting a metal oxide with a more reactive metal. This reactive metal can then reduce the oxide such that the reactive metal bonds with the oxygen to a new metal oxide, while the initial metal in the oxide is extracted as pure metal. The reaction thus releases a high amount of heat. This heat can be utilized to melt the filling material. In such an exothermic reaction composition the reducing metal can be e.g. metallic aluminium.

Examples of metal oxides in such compositions are iron(III) oxide, zinc oxide, copper(I) oxide, manganic oxide and calcium oxide. Such a composition is called a thermite composition, and when it consists of aluminium and iron oxide in a fine grind such as a powder, the oxygen atoms are transferred from the iron to the aluminium, and a lot of heat is generated. Additional metal positioned in or adjacent the composition, e.g. iron, will melt and be liquefied. In the process, liquid iron and aluminium oxide (alumina) is formed.

While the iron forms a melt, alumina Al₂O₃ has a higher melting point and will therefore act as a solid oxide which will float on the surface of the melt as dross. The temperature in such reactions can reach 3000 °C depending on the composition proportions and environmental factors, such that both products can be in a liquid state. One example of such a transition is given by the following reaction equation:

2 Al + Fe₂O₃ = 2 Fe + Al₂O₃

Pure iron and alumina Al₂O₃ is thus formed. It is an advantage that the composition proportions between aluminium and iron oxide corresponds to the theoretical stoichiometric amount of these two substances, such that both substances are conversed approximately 100%.

Such thermite compositions are common in when welding steel constructions, such as in long welded rails.

Iron is heavier than aluminium oxide, and will sink in a melt composition of these two substances, i.e. when the reaction according to the conversion above is almost 100% to the right.

The exothermic reaction can be carried out in a container or crucible which is adapted to melting substances of high temperatures. The crucible is an incombustible melting pot which is non-porous, unaffected by chemical substances and can withstand high fluctuations of temperature. As a material for a crucible can be mentioned porcelain, platina, quartz sand and chamotte, graphite with clay as a fixing agent.

There are also some examples of thermite or aluminothermic welding of pipes.

US patent 3948434 A discloses annular coupling members for welding together sections of pipe used, containing annular bodies of exothermic materials such as "Thermite" material, and upon being ignited, producing welding of the interfaces between the coupler and a pair of pipes welded thereto or between the two pipes directly.

US patent 3542402 A, discloses a metal tube containing pyrotechnic material that liberates substantially no gas on burning is embedded in and adjacent a mating surface of an article of thermoplastic resin. The article is joined to another article of thermoplastic resin having a mating surface by bringing the mating surfaces together and igniting the pyrotechnic, forming a fused joint between the mating surfaces. A preferred pyrotechnic contains aluminium, boron, barium chromate and aluminium oxide.

DE 15027 C discloses a method for producing lead-pipe connections and apparatus used for this purpose. The lead-pipe connections are produced by inserting a short metal tube into the joint, by application of heat and pressure the end of the lead-pipes, and the short metal tube, are fused together, or molded together by the use of a soldering metal.

US 3684003 A (basis for the preamble of claims 1 and 10) discloses a mold for conducting molten weld metal from a crucible to a position surrounding the abutting ends of two pipe joints to fuse the weld metal and the abutting pipe ends.

DE 707781 C discloses a method of preheating rail joints to be welded.

DE 29812242 U1 discloses a device for controlling the cooling rate of the connection between two rail ends produced by intermediate casting, comprising an insulating housing intended and arranged for at least partially encircling of the intermediate casting area of the connection of the two rails. The insulating housing can be used to influence the local structure formation such that formation of martensitic structure is suppressed and instead the formation of for example bainitic structure is made possible.

### SHORT SUMMARY

A goal with the present invention is to overcome the problems of prior art, and to disclose a welding method and device where the resulting weld has less volumetric defects than pipe welds according to prior art.

It is further an objective of the invention to present a welding method and device where quality is increased, i.e. the same result can be obtained repeatedly as long as the same setup is used. This reduces the need for weld inspection and acceptance. Thus weld quality assurance can be shifted from a post-weld to a pre-weld approach.

From the above it is also evident that the quality of the resulting weld is less dependent on the skilled person involved in welding process.

In summary, the advantages defined above can lead to considerable reductions of time and cost for pipe welding.

The invention solving the above mentioned problems is a method of aluminothermic welding together of first and second pipe members as defined in claim 1, and comprising the steps of:
- arranging a sleeve in a welding position where it covers both the pipe members and forms a cavity surrounding the pipe members.
- arranging an input channel between a crucible and the cavity, wherein the input channel enters into the cavity through a first opening in a wall of the sleeve in a lower part of the sleeve when the sleeve is in the welding position.
- providing an exothermic mixture in the crucible.
- igniting the exothermic mixture to create a melt of the exothermic material.
- allowing the melt to flow down the input channel, through the first opening before it continues to flow up through the cavity on both sides of the pipe members, until the cavity is filled up with the melt.
- draining gases through a second opening in a wall of the sleeve in an upper part of the sleeve, when the sleeve is in the welding position.

The invention solving the above mentioned problems is also an aluminothermic welding device for welding together of first and second pipe members as defined in claim 10, and comprising:
- a sleeve configured to cover both pipe members and to form a cavity surrounding the pipe members when it is in a welding position.
- a crucible.
- a drain channel connected to a second opening in a wall of the sleeve, in an upper part of the sleeve when the sleeve is in the welding position, wherein the second opening is configured to drain gases from the cavity.
- an input channel between the crucible and the cavity, wherein the input channel enters into the cavity through a first opening in a wall of the sleeve in a lower part of the sleeve when the sleeve is in the welding position.

Preferred embodiments of the present invention are defined in the dependent claims.

### BRIEF DESCRIPTION OF THE DRAWINGS

Fig. 1a, 1b, 1c and 1d illustrate an embodiment of the invention in different sectional views.

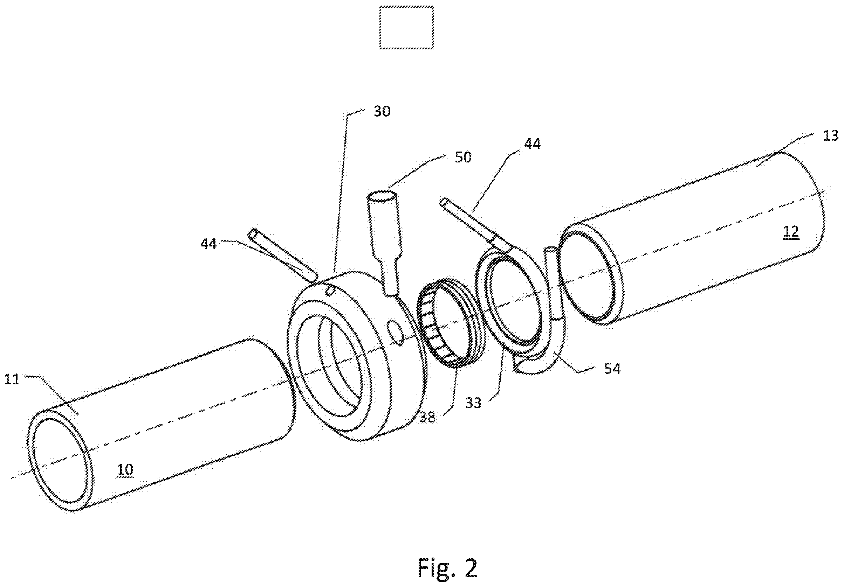

Fig. 2 illustrates the same embodiment as in Fig. 1a, 1b, 1c and 1d, in an exploded view.
Fig. 3 illustrates an embodiment of the invention, with a cooling mantel (60).
Fig. 4 illustrates an embodiment of the invention where one of the pipe ends welded is terminated in a flange (70)

### EMBODIMENTS OF THE INVENTION

In the following description, various examples and embodiments of the invention are set forth in order to provide the skilled person with a more thorough understanding of the invention. The specific details described in the context of the various embodiments and with reference to the attached drawings are not intended to be construed as limitations. Rather, the scope of the invention is defined in the appended claims.

The invention is in the following described in relation to joining two pipes or pipe members, such as a pipe and a pipe flange. The invention may be applied to metal parts in general which are to be joined.

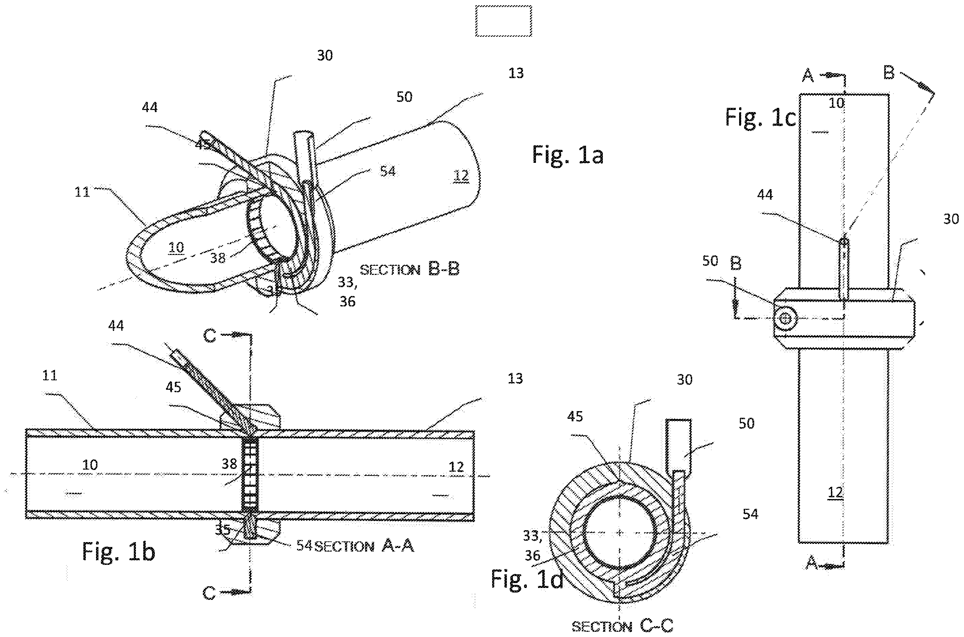

An embodiment of an aluminothermic welding device according to the invention is illustrated in Fig. 1a, b and c, showing the same device in different section views.

When the welding device is used for welding, it should be aligned properly to ensure the best result. For the remainder of the document, the device is defined to be in a welding position when it is aligned for welding.

One such welding position can be the one illustrated in Fig. 1a, b, c and d, wherein two pipes (10, 12) are placed end-to-end, adjacent to each other for being welded together with a welding joint.

One of the main components of the welding device is the sleeve (30), which is configured to cover both pipe members (10, 12) and to form a cavity (33) surrounding the pipe members (10, 12) when it is in a welding position. The inside of the sleeve (30) fits tightly to pipe surfaces (11, 13), which can be provided by known means with different tightening means. The sleeve (30) can e.g. be in two parts and rotate about a hinge, where the free ends are moved towards each other and joined and tightened by means of screw connections or similarly such that the inside of the sleeve (30) is tightly fitted to the pipe surfaces (11, 13).

The welding device also comprises a crucible (50), where the exothermic reaction can be carried out. The crucible is adapted to melting substances of high temperatures according to prior art as described previously.

Further, the welding device comprises an input channel (54) connected to the crucible (54) where melt can flow into the cavity (33) and a drain channel (44) where resulting gases and dross can be drained or extracted from the cavity (33).

The drain channel (44) is connected to a second opening (45) in a wall of the sleeve (30), in an upper part of the sleeve (30), and the input channel (54) is arranged between the crucible (50) and the cavity (33), wherein the input channel (54) enters into the cavity (33) through a first opening (35) in a wall of the sleeve (30) in a lower part of the sleeve (30) when the sleeve is in the welding position.

In an embodiment the first opening (35) is arranged at the top of said cavity (33). In an embodiment the second opening (45) is arranged in at the bottom of said cavity (33).

In an embodiment the first and/or second opening (35, 45) are arranged along a vertical line through a center of said sleeve (35).

In an embodiment, the crucible (50) is arranged above the cavity (33) when the sleeve (30) is in the welding position.

In an embodiment, at least a portion of the input channel (54) runs inside the wall of the sleeve (30) between an upper part of the sleeve and the first opening (). The sleeve (30) may be seen as a mold for the welding where the first opening (35) and the input channel (54) constitute a single channel running inside the mold.

In an embodiment, an inner surface of the sleeve (30) has a groove (32) forming an outer wall of the cavity (33).

In an embodiment, the pipe members (10, 12) have tapered ends, configured towards and adjacent each other forming an inner wall of the cavity (33).

The groove (32) in the sleeve (30) can in an embodiment be combined with the tapered ends of the pipe member s (10, 12). The groove (32) together with the slot defined by the tapered ends forms a surrounding drop shaped volume, i.e. the cavity (33), which is to be filled with melted welding material.

In an embodiment, the sleeve (30) has a circular inner cross section and the cavity (33) is annular.

In an embodiment, the welding device comprises a support ring (38) configured to be arranged inside the first pipe member (10) before welding. The support ring prevents melt to enter into the inner diameter between the two adjacent pipe members (10, 12).

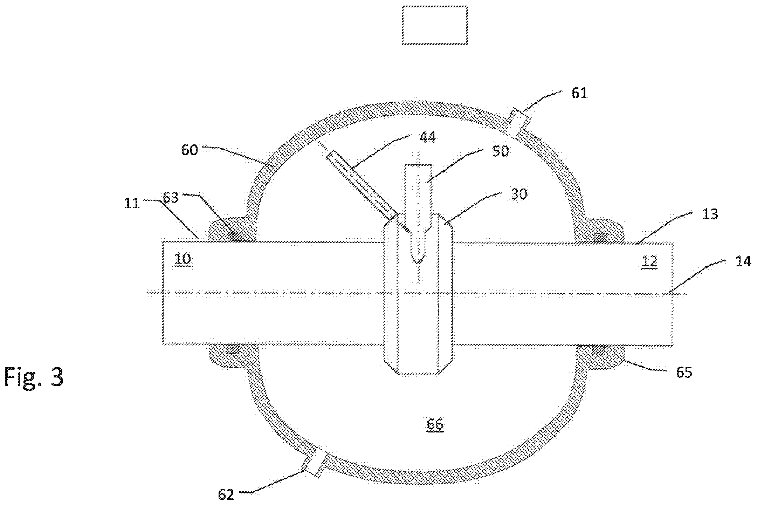

In an embodiment, the welding device comprises a cooling mantle as illustrated in Fig. 3. The cooling mantle (60) is illustrated in a sectional view, while the other components are illustrated in an isometric view.

The cooling mantle (60) is arranged about the sleeve (30) and forms a cooling cavity (66) between the cooling mantle (60) and the sleeve (30). In a further detailed embodiment the end portions of the mantle (60) is closely fitted to the surface (11, 13) of the pipes (10, 12) by means of suitable packings marked as (63) and (65).

The cooling mantle can be made of different tyoes of materials. In an embodiment, the cooling mantle (60) is made of steel.

An inlet is illustrated as pipe socket (61), and a corresponding outlet is shown as pipe socket (62). The roof or wall portions of the cooling mantle (60) comprise openings for the crucible (50) and the drain channel (44).

An annealing fluid such as a gas or a liquid can, in ways known in the art, be supplied to the cooling cavity (66) through pipe socket (61), flow through the cooling cavity (66) and further be exhausted through outlet (62).

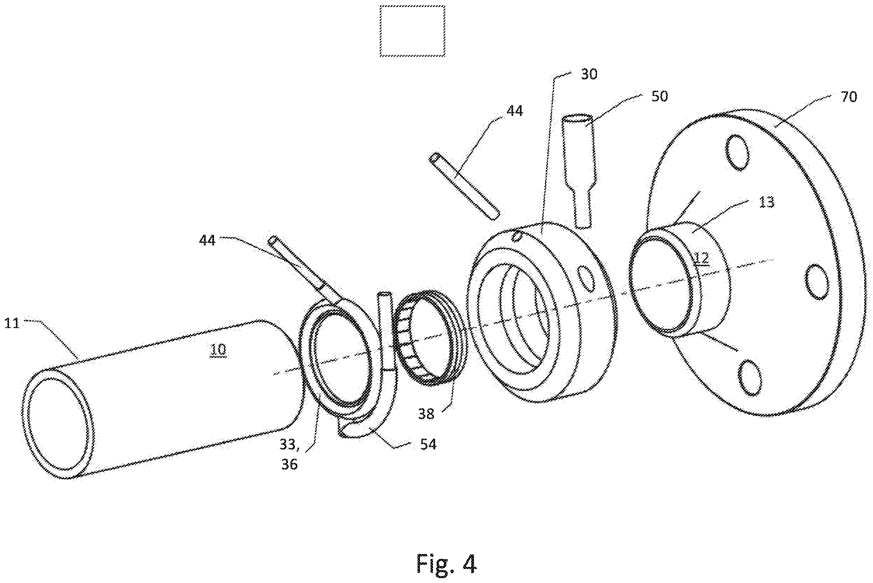

Although the previous embodiments have been illustrated with pipes, one or both of the pipe members (10, 12) may also be pipe flanges (70) as illustrated in Fig. 4. Since the pipe flange also terminates in a pipe, there will not be any significant difference when it comes to the welding device or welding process, and these embodiments also fell within the scope of the claimed invention.

Depending on the specific pipe flange, the cooling mantel may have to be adapted, as will be understood by a person skilled in the art.

Embodiments of the welding method according to the invention will be described with reference to Figures 1a, 1b, 1c and 1d. Please refer to the description above of the welding device for further details regarding the elements of the device.

As previously noted the invention is also a method for aluminothermic welding together of first and second pipe members (10, 12).

One step to be performed, is to arrange the input channel (54) between a crucible (50) and the cavity (33), such that the input channel (54) enters into the cavity (33) through a first opening (35) in a wall of the sleeve (30) in a lower part of the sleeve (30) when the sleeve is in the welding position. Please see above for definition of welding position. The first opening (35) is allows melt from the crucible (50) to be in fluid communication with the cavity (33) via the input channel (54).

The crucible (50) is filled with an exothermic mixture, such as a thermite mixture. The exothermic mixture is ignited, or inflamed to create a melt (36), which can now flow freely down the input channel (54), through the first opening (35) before it continues to flow up through the cavity on both sides of the pipe members (10, 12), until the cavity (33) is filled up with the melt (36).

At the same time the oxidation product is secreted as a solid dross floating upwards to the top of the cavity (33). This is due to iron in a liquid state has a higher density than the oxides and will sink, while the oxide phase and dross phase will float. This dross phase will float to the top and be diverted together with the gas which also could be released by the exothermic conversion draining gases and dross, out of a second opening (45) in a wall of the sleeve (30) in an upper part of the sleeve (30).

The purpose of the second opening (45) is that a need for ventilation of gases/dross immediately arises when the exothermic reaction takes place, and melt flows up in the cavity (33). As gases released from the melt leads to a certain pressure increase, it is important that such gas can freely escape through the second opening (45). The removal of gases and dross has been optimized in the device and method according to the invention, where the melt enters the lower part of the cavity (33). Gases and dross will therefore escape easily upwards inside the cavity (33) and through the second opening (45). The result is a welding joint with less volumetric failures than prior art.

As part of the process the sleeve (30) should be arranged in the welding position. This should be done before igniting the exothermic mixture, such that the melt flows properly through the channels and a high-quality weld can be achieved.

Pre-heating can be used to further improve the quality of the weld. In an embodiment the method comprises pre-heating the first and second pipe members (10, 12) before igniting said exothermic mixture.

In an embodiment the pipe members (10, 12) are heated to about 700 degree Celsius.

This can be achieved by various means. In its simplest form the pipe members (10, 12) may be pre-heated directly before arranging them in the sleeve (30) by heat from e.g. a gas burner, electric heater or chemical heater.

It can also be achieved by heating the pipe members (10, 12) after they have been arranged in the sleeve by e.g. blowing a gas flame from a gas burner into the sleeve (30), or using an electric or chemical heat element to pre-heat the form.

In an embodiment, the method comprises the step of arranging the crucible (50) above the cavity (33) when the sleeve (30) is in the welding position.

In this part of the process, it is important to control that the temperature does not drop too fast, such that the dross phase and gases is allowed to float completely to allow upwards through the second opening (45). These substances can be removed before the viscosity of the melt is too high, and the melt solidifies. Voids in the weld joint, generated due to impurities such as oxides/dross and/or gases, should be avoided as far as possible.

In an embodiment the method comprises the step of cooling the melt (36) to establish a solid weld joint.

Temperature control could in an embodiment be carried out by adding hot fluid, e.g. hot gases in circulation through cooling cavity (66), and then controlling the temperature drop in the melt joint via the temperature in the mantle gas. As a coolant for circulation in the cooling cavity (66), water or other liquid/gas could be utilized, if the temperature at the inlet is adapted to the temperature in the joining area.

Before the cooling mantle (60) has mounted to the pipes (10, 12), alternatively before the melting process has been initialized, the pipe ends are in an embodiment pre-heated up to the temperature at which the melt flows from the crucible (50), and then the temperature is brought to drop in a controlled manner.

In an embodiment, the method comprises the steps of extracting the oxidation products through a drain channel (44). An external drain pump connected to the drain channel (44) may be used to improve extraction.

In an embodiment, the method comprises the step of creating the melt comprised of iron and alumina by creating an exothermic reaction from a transformation of the exothermic mixture comprising iron oxide and aluminum.

In an embodiment, the exothermic mixture comprises iron powder or iron particles. However, other metals or mixture of metals may also be used in other embodiments to weld alloys, such as e.g. Chromium, Nickel and Molybdenum.

When the welding joint has cooled down, the cooling mantle (60) and sleeve (30) are removed, upon which the joint can be treated by grinding, polishing or other suitable processing in order to form an even and smooth joint. Alternatively, the sleeve (30) could form part of the pipe joint and be left welded in place.

## Claims

1. A method of aluminothermic welding together of first and second pipe members (10, 12), comprising the steps of;
- arranging a sleeve (30) in a welding position where it covers both said pipe members (10, 12) and forms a cavity (33) surrounding said pipe members (10, 12),
and being **characterised by** the following steps:
- arranging an input channel (54) between a crucible (50) and said cavity (33), wherein said input channel (54) enters into said cavity (33) through a first opening (35) in a wall of said sleeve (30) in a lower part of said sleeve (30) when said sleeve is in said welding position,
- providing an exothermic mixture in said crucible (50),
- igniting said exothermic mixture to create a melt (36) of said exothermic material,
- allowing said melt (36) to flow down said input channel (54), through said first opening (35) before it continues to flow up through said cavity on both sides of said pipe members (10, 12), until said cavity (33) is filled up with said melt (36),
- draining gases through a second opening (45) in a wall of said sleeve (30) in an upper part of said sleeve (30), when said sleeve is in said welding position.

2. The method of claim 1, comprising the step of
- arranging said crucible (50) above said cavity (33) when said sleeve (30) is in said welding position.

3. The method of claim 1 or 2, comprising the step of
- pre-heating said first and second pipe members (10, 12) before igniting said exothermic mixture.

4. The method of claim 1, 2 or 3, comprising the step of;
- cooling said melt (36) to establish a solid weld joint.

5. The method of claim 4 comprising the step of;
- controlling a temperature of said melt (36) to allow oxidation products being separated from the melt (36) to flow upwards through said second opening ().

6. The method of claim 5, comprising the step of;
- circulating cooling fluid inside a cooling mantle (60) surrounding said sleeve (30).

7. The method according to any of the claims above, comprising the step of;
- extracting said oxidation products through a drain channel (44).

8. The method according to any of the claims above, comprising the step of;
- creating said melt comprised of iron and alumina by creating an exothermic reaction from a transformation of said exothermic mixture comprising iron oxide and aluminum.

9. The method according to any of the claims above, wherein said exothermic mixture comprises iron powder or iron particles.

10. An aluminothermic welding device for welding together of first and second pipe members (10, 12), comprising;
- a sleeve (30) configured to cover both pipe members (10, 12) and to form a cavity (33) surrounding said pipe members (10, 12) when it is in a welding position,
being **characterised by** further comprising:
- a crucible (50),
- a drain channel (44) connected to a second opening (45) in a wall of said sleeve (30), in an upper part of said sleeve (30) when said sleeve is in said welding position, wherein said second opening is configured to drain gases from said cavity (33), and
- an input channel (54) between said crucible (50) and said cavity (33), wherein said input channel (54) enters into said cavity (33) through a first opening (35) in a wall of said sleeve (30) in a lower part of said sleeve (30) when said sleeve is in said welding position.

11. The welding device of claim 10, wherein
- said crucible (50) is arranged above said cavity (33) when said sleeve (30) is in said welding position.

12. The welding device of any of the claims 10 to 11 above, wherein at least a portion of said input channel (54) is arranged inside said wall of said sleeve (30) between an upper part of said sleeve and said first opening (35).

13. The welding device of any of the claims 10 to 12 above, wherein an inner surface of said sleeve (30) has a groove (32) forming an outer wall of said cavity (33).

14. The welding device of any of the claims 10 to 13 above, wherein said pipe members (10, 12) have tapered ends, configured towards and adjacent each other forming an inner wall of said cavity (33).

15. The welding device of any of the claims 10 to 14 above, wherein said sleeve (30) has a circular inner cross section and said cavity (33) is annular.

16. The welding device of any of the claims 10 to 15 above, comprising a support ring (38) configured to be arranged inside said first pipe member (10) before welding.

17. The welding device of any of the claims 10 to 16 above, comprising and forming a cooling cavity (66) between said cooling mantle (60) and said sleeve (30).and forming a cooling cavity (66) between said cooling mantle (60) and said sleeve (30).

## Patentansprüche

1. Verfahren zum aluminothermischen Verschweißen von einem ersten und einem zweiten Rohrelement (10, 12), umfassend die folgenden Schritte;
- Anordnen einer Hülse (30) in einer Schweißposition, in der sie die beiden Rohrelemente (10, 12) abdeckt und einen Hohlraum (33) bildet, der die Rohrelemente (10, 12) umgibt,
und **gekennzeichnet durch** die folgenden Schritte:
- Anordnen eines Einlasskanals (54) zwischen einem Tiegel (50) und dem Hohlraum (33), wobei der Einlasskanal (54) in den Hohlraum (33) durch eine erste Öffnung (35) in einer Wand der Hülse (30) in einem unteren Teil der Hülse (30) eintritt, wenn sich die Hülse in der Schweißposition befindet,
- Bereitstellen einer exothermen Mischung in dem Tiegel (50),
- Anzünden der exothermen Mischung zur Bildung einer Schmelze (36) des exothermen Materials,
- Veranlassen, dass die Schmelze (36) nach unten durch den Einlasskanal (54), durch die erste Öffnung (35) strömen kann, bevor sie fortsetzt, nach oben durch den Hohlraum an beiden Seiten der Rohrelemente (10, 12) zu strömen, bis der Hohlraum (33) mit der Schmelze (36) gefüllt worden ist,
- Ableiten von Gasen durch eine zweite Öffnung (45) in einer Wand der Hülse (30) in einem oberen Teil der Hülse (30), wenn sich die Hülse in der Schweißposition befindet.

2. Verfahren nach Anspruch 1, umfassend den folgenden Schritt
- Anordnen des Tiegels (50) über dem Hohlraum (33), wenn sich die Hülse (30) in der Schweißposition befindet.

3. Verfahren nach Anspruch 1 oder 2, umfassend den folgenden Schritt
- Vorwärmen des ersten und zweiten Rohrelements (10, 12) vor dem Anzünden der exothermen Mischung.

4. Verfahren nach Anspruch 1, 2 oder 3, umfassend den folgenden Schritt;
- Abkühlen der Schmelze (36) zum Aufbauen einer soliden Schweißnaht.

5. Verfahren nach Anspruch 4 umfassend den folgenden Schritt;
- Steuern einer Temperatur der Schmelze (36), um zu ermöglichen, dass von der Schmelze (36) abgetrennte Oxidationsprodukte durch die zweite Öffnung () nach oben strömen können.

6. Verfahren nach Anspruch 5, umfassend den folgenden Schritt;
- Zirkulieren von Kühlflüssigkeit innerhalb eines die Hülse (30) umgebenden Kühlmantels (60).

7. Verfahren nach einem der Ansprüche, umfassend den folgenden Schritt;
- Extrahieren der Oxidationsprodukte durch eine Ablaufrinne (44).

8. Verfahren nach einem der vorgehenden Ansprüche, umfassend den folgenden Schritt;
- Bilden der Schmelze aus Eisen und Aluminiumoxid durch Bilden einer exothermen Reaktion aus einer Transformation der exothermen Mischung umfassend Eisenoxid und Aluminium.

9. Verfahren nach einem der vorgehenden Ansprüche, wobei die exotherme Mischung Eisenpulver oder Eisenpartikel umfasst.

10. Aluminothermische Schweißvorrichtung zum Verschweißen eines ersten und zweiten Rohrelements (10, 12), umfassend;
- eine Hülse (30), die ausgebildet ist, die beiden Rohrelemente (10, 12) abzudecken und einen Hohlraum (33) zu bilden, die die Rohrelemente (10, 12) umgibt, wenn sie sich in einer Schweißposition befindet, **dadurch gekennzeichnet, dass** sie ferner Folgendes umfasst:
- einen Tiegel (50),
- eine Ablaufrinne (44), die mit einer zweiten Öffnung (45) in einer Wand der Hülse (30), in einem oberen Teil der Hülse (30) verbunden ist, wenn sich die Hülse in der Schweißposition befindet, wobei die zweite Öffnung zum Ableiten von Gasen aus dem Hohlraum (33) ausgelegt ist, und
- einen Einlasskanal (54) zwischen dem Tiegel (50) und dem Hohlraum (33), wobei der Einlasskanal (54) in den Hohlraum (33) durch eine erste Öffnung (35) in einer Wand der Hülse (30) in einem unteren Teil der Hülse (30) eintritt, wenn sich die Hülse in der Schweißposition befindet.

11. Schweißvorrichtung nach Anspruch 10, wobei
- der Tiegel (50) über dem Hohlraum (33) angeordnet ist, wenn sich die Hülse (30) in der Schweißposition befindet.

12. Schweißvorrichtung nach einem der vorgehenden Ansprüche 10 bis 11, wobei zumindest ein Teil des Einlasskanals (54) innerhalb der Wand der Hülse (30) zwischen einem oberen Teil der Hülse und der ersten Öffnung (35) angeordnet ist.

13. Schweißvorrichtung nach einem der vorgehenden Ansprüche 10 bis 12, wobei eine Innenfläche der Hülse (30) eine Nut (32) aufweist, die eine Außenwand des Hohlraums (33) bildet.

14. Schweißvorrichtung nach einem der vorgehenden Ansprüche 10 bis 13, wobei die Rohrelemente (10, 12) zugespitzte Enden aufweisen, die gegeneinander und aneinander angrenzend ausgebildet sind, indem sie eine Innenwand des Hohlraums (33) bilden.

15. Schweißvorrichtung nach einem der vorgehenden Ansprüche 10 bis 14, wobei die Hülse (30) einen kreisförmigen inneren Querschnitt aufweist, und der Hohlraum (33) ringförmig ist.

16. Schweißvorrichtung nach einem der vorgehenden Ansprüche 10 bis 15, umfassend einen Stützring (38), der zum Anordnen innerhalb des ersten Rohrelements (10) vor dem Schweißen ausgebildet ist.

17. Schweißvorrichtung nach einem der vorgehenden Ansprüche 10 bis 16, die einen Kühlhohlraum (66) zwischen dem Kühlmantel (60) und der Hülse (30) umfasst und bildet.

## Revendications

1. Procédé de soudage aluminothermique de premier et deuxième éléments de tuyau (10, 12) l'un avec l'autre, comprenant les étapes consistant à ;
- disposer un manchon (30) dans une position de soudage où il recouvre lesdits deux éléments de tuyau (10, 12) et forme une cavité (33) entourant lesdits éléments de tuyau (10, 12),
et étant **caractérisé par** les étapes consistant à :
- disposer un canal d'entrée (54) entre un creuset (50) et ladite cavité (33), ledit canal d'entrée (54) entrant dans ladite cavité (33) à travers une première ouverture (35) dans une paroi dudit manchon (30) dans une partie inférieure dudit manchon (30) lorsque ledit manchon est dans ladite position de soudage,
- fournir un mélange exothermique dans ledit creuset (50),
- allumer ledit mélange exothermique pour créer une masse fondue (36) dudit matériau exothermique,
- permettre à ladite masse fondue (36) de s'écouler dans ledit canal d'entrée (54), à travers ladite première ouverture (35) avant qu'elle ne continue à remonter à travers ladite cavité des deux côtés desdits éléments de tuyau (10, 12), jusqu'à ce que ladite cavité (33) soit remplie de ladite masse fondue (36),
- drainer des gaz par une deuxième ouverture (45) dans une paroi dudit manchon (30) dans une partie supérieure dudit manchon (30), lorsque ledit manchon est dans ladite position de soudage.

2. Procédé selon la revendication 1, comprenant en outre l'étape consistant à
- disposer ledit creuset (50) au-dessus de ladite cavité (33) lorsque ledit manchon (30) est dans ladite position de soudage.

3. Procédé selon la revendication 1 ou 2, comprenant en outre l'étape consistant à
- préchauffer lesdits premier et deuxième éléments de tuyau (10, 12) avant d'allumer ledit mélange exothermique.

4. Procédé selon la revendication 1, 2 ou 3, comprenant l'étape consistant à ;
- refroidir ladite masse fondue (36) pour établir un joint de soudure solide.

5. Procédé selon la revendication 4, comprenant l'étape consistant à :
- contrôler une température de ladite masse fondue (36) pour permettre aux produits d'oxydation étant séparés de la masse fondue (36) de s'écouler vers le haut à travers ladite deuxième ouverture ().

6. Procédé selon la revendication 5, comprenant l'étape consistant à ;
- faire circuler du fluide de refroidissement à l'intérieur d'un manteau de refroidissement (60) entourant ledit manchon (30).

7. Procédé selon l'une quelconque des revendications précédentes, comprenant l'étape consistant à ;
- extraire lesdits produits d'oxydation par un canal de drainage (44).

8. Procédé selon l'une quelconque des revendications précédentes, comprenant l'étape consistant à ;
- créer ladite masse fondue constituée de fer et d'alumine en créant une réaction exothermique à partir d'une transformation dudit mélange exothermique comprenant de l'oxyde de fer et de l'aluminium.

9. Procédé selon l'une quelconque des revendications précédentes, dans lequel ledit mélange exothermique comprend de la poudre de fer ou des particules de fer.

10. Dispositif de soudage aluminothermique pour souder des premier et deuxième éléments de tuyau (10, 12) l'un avec l'autre, comprenant ;
- un manchon (30) configuré pour recouvrir les deux éléments de tuyau (10, 12) et pour former une cavité (33) entourant lesdits éléments de tuyau (10, 12) lorsqu'il est dans une position de soudage, étant **caractérisé en ce qu'**il comprend en outre :
- un creuset (50),
- un canal de drainage (44) raccordé à une deuxième ouverture (45) dans une paroi dudit manchon (30), dans une partie supérieure dudit manchon (30) lorsque ledit manchon est dans ladite position de soudage, ladite deuxième ouverture étant configurée pour drainer les gaz de ladite cavité (33), et
- un canal d'entrée (54) situé entre ledit creuset (50) et ladite cavité (33), ledit canal d'entrée (54) pénétrant dans ladite cavité (33) à travers une première ouverture (35) dans une paroi dudit manchon (30) dans une partie inférieure dudit manchon (30) lorsque ledit manchon est dans ladite position de soudage.

11. Dispositif de soudage selon la revendication 10, dans lequel
- ledit creuset (50) est disposé au-dessus de ladite cavité (33) lorsque ledit manchon (30) est dans ladite position de soudage.

12. Dispositif de soudage selon l'une quelconque des revendications 10 à 11 ci-dessus, dans lequel au moins une partie dudit canal d'entrée (54) est disposée à l'intérieur de ladite paroi dudit manchon (30) entre une partie supérieure dudit manchon et ladite première ouverture (35).

13. Dispositif de soudage selon l'une quelconque des revendications 10 à 12 ci-dessus, dans lequel une surface intérieure dudit manchon (30) présente une rainure (32) formant une paroi extérieure de ladite cavité (33).

14. Dispositif de soudage selon l'une quelconque des revendications 10 à 13 ci-dessus, dans lequel lesdits éléments de tuyau (10, 12) ont des extrémités effilées, configurées l'une vers l'autre et adjacentes l'une à l'autre formant une paroi intérieure de ladite cavité (33).

15. Dispositif de soudage selon l'une quelconque des revendications 10 à 14 ci-dessus, dans lequel ledit manchon (30) présente une section transversale intérieure circulaire, et ladite cavité (33) est annulaire.

16. Dispositif de soudage selon l'une quelconque des revendications 10 à 15 ci-dessus, comprenant une bague de support (38) configurée pour être disposée à l'intérieur dudit premier élément de tuyau (10) avant le soudage.

17. Dispositif de soudage selon l'une quelconque des revendications 10 à 16 ci-dessus, comprenant et formant une cavité de refroidissement (66) entre ledit manteau de refroidissement (60) et ledit manchon (30), et formant une cavité de refroidissement (66) entre ledit manteau de refroidissement (60) et ledit manchon (30).
